# EUROPEAN PATENT SPECIFICATION

(11) **EP 3 351 590 B1**
(45) Date of publication and mention of the grant of the patent: **23.10.2019**
(21) Application number: 16845903.0
(22) Date of filing: 30.08.2016
(51) Int. Cl.: C08L 9/02, C08K 3/26, C08K 5/09, C08L 23/16, F16L 11/08, F16L 11/04

(54) **RUBBER COMPOSITION FOR HOSES, AND HYDRAULIC HOSE**
KAUTSCHUKZUSAMMENSETZUNG FÜR SCHLÄUCHE UND HYDRAULIKSCHLAUCH
COMPOSITION DE CAOUTCHOUC POUR TUYAUX SOUPLES ET TUYAU SOUPLE HYDRAULIQUE

(30) Priority: 16.09.2015 JP 2015183199
(43) Date of publication of application: 25.07.2018
(73) Proprietor: Bridgestone Corporation, Tokyo 104-8340 (JP)
(72) Inventor: TSUNENISHI, Youhei, Tokyo 104-8340 (JP); OCHIAI, Sho, Tokyo 104-8340 (JP)
(74) Representative: Oxley, Robin John George
(86) International application number: PCT/JP2016/003961
(87) International publication number: WO 2017/047025

(56) References cited:
- WO-A1-2012/114667
- JP-A- 2005 188 607
- JP-A- 2005 291 281
- JP-A- 2008 265 283
- JP-A- 2009 215 674
- JP-A- 2010 164 063
- JP-A- 2011 011 542
- US-A1- 2015 183 970

## Description

### TECHNICAL FIELD

The present disclosure relates to a hose rubber composition and a hydraulic hose.

### BACKGROUND

Conventionally, a chloroprene rubber (CR)-based rubber composition has been employed for the outer cover rubber of hydraulic hoses, as the composition is well-balanced in a wide range of rubber characteristics, such as weather resistance, wear resistance, heat resistance, oil resistance, and low temperature properties, which are important factors in the outer cover rubber.

On the other hand, in recent years, environmental considerations call for an increasing demand for rubber compositions of a blend system of acrylonitrile-butadiene rubber (NBR) and ethylene-propylene-diene rubber (EPDM), without using chloroprene rubber (CR) containing chlorine, where acrylonitrile-butadiene rubber (NBR) is to develop oil resistance and ethylene-propylene-diene rubber (EPDM) is to develop weather resistance and heat resistance (see PTL 1 and PTL 2 below). In the above-mentioned blend system, sulfur, a cobalt salt of an organic acid, silica, and a resorcinol-formaldehyde (RH)-based resin are used as compounding agents for securing adhesiveness to wires.

### CITATION LIST

### Patent Literature

PTL 1: JP 2001-192505 A
PTL 2: WO 2008/108198 A

### SUMMARY

### (Technical Problem)

However, EPDM has few double bond sites, and thus the NBR/EPDM blend system is unstable in adhesiveness to wires.

Further, most of NBR and EPDM are produced through emulsion polymerization, and we have found that the NBR/EPDM blend system produced through emulsion polymerization is very unstable in adhesiveness to wires.

Therefore, it could be helpful to provide a hose rubber composition capable of solving the above-mentioned problems of the conventional art and having improved adhesiveness to wires while maintaining rubber characteristics.

Further, it could also be helpful to provide a hydraulic hose employing the hose rubber composition and having high durability.

### (Solution to Problem)

We provide the followings to solve the above-mentioned problems.

The disclosed rubber composition contains: acrylonitrile-butadiene rubber (NBR) and ethylene-propylene-diene rubber (EPDM) as rubber components; and a cobalt salt of an organic acid and hydrotalcite, in which 0.5 to 5 parts by mass of the hydrotalcite is contained with respect to 100 parts by mass of the rubber components, the cobalt salt of an organic acid is cobalt versatate, and the rubber components of the hose rubber composition consist only of the acrylonitrile-butadiene rubber (NBR) and the ethylene-propylene-diene rubber (EPDM).

The hose rubber composition is improved in adhesiveness to wires while maintaining rubber characteristics.

According to a preferred example of the disclosed hose rubber composition, 1 to 5 parts by mass of the cobalt salt of an organic acid is contained with respect to 100 parts by mass of the rubber components. In this case, the adhesiveness to wires improves further, and processability of the rubber composition is also favorable.

According to the hose rubber composition of the present invention, cobalt versatate is included as the cobalt salt of an organic acid. In this case, the adhesiveness to wires improves furthermore.

According to still another preferred example of the disclosed hose rubber composition, a mass ratio (NBR/EPDM) of the acrylonitrile-butadiene rubber (NBR) to the ethylene-propylene-diene rubber (EPDM) is 55/45 to 75/25. In this case, oil resistance and weather resistance are particularly favorable.

The hydraulic hose of the present disclosure employs the above-mentioned hose rubber composition. The above-mentioned hydraulic hose has high durability.

### (Advantageous Effect)

The disclosed hose rubber composition has improved adhesiveness to wires while maintaining rubber characteristics.

Further, the disclosed hydraulic hose has high durability.

### BRIEF DESCRIPTION OF THE DRAWING

In the accompanying drawing:

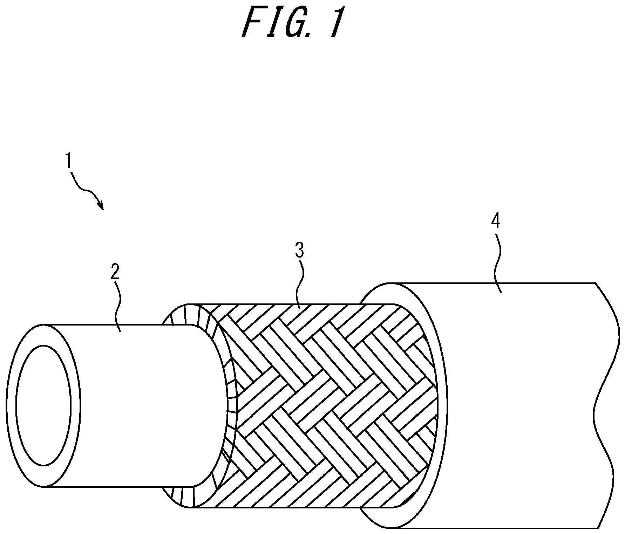

FIG. 1 is a perspective view illustrating a laminated structure of a hydraulic hose according to an embodiment of the present disclosure employing a hose rubber composition of the present disclosure.

### DETAILED DESCRIPTION

Hereinafter, the disclosed hose rubber composition and hydraulic hose will be described specifically based on embodiments.

### <Hose Rubber Composition>

The disclosed hose rubber composition consists only of acrylonitrile-butadiene rubber (NBR) and ethylene-propylene-diene rubber (EPDM) as rubber components; and a cobalt salt of an organic acid and hydrotalcite, in which 0.5 to 5 parts by mass of the hydrotalcite is contained with respect to 100 parts by mass of the rubber components.

The hose rubber composition of the present disclosure contains 0.5 parts by mass to 5 parts by mass of hydrotalcite with respect to 100 parts by mass of the rubber components, and the hydrotalcite adsorbs moisture or emulsifier component deriving from raw materials or penetrating into the rubber components during storage. The hose rubber composition containing a cobalt salt of an organic acid has high adhesiveness to wires by nature. However, a rubber composition containing a polymer produced through emulsion polymerization may be lowered in adhesiveness to wires under high moisture content, and thus, the adhesiveness to wires is influenced by the raw materials and storage conditions. On the other hand, in the disclosed hose rubber composition, hydrotalcite is considered to absorb moisture or emulsifier component. Thus, the adhesiveness to wires is high regardless of the raw materials or storage conditions, which suppresses the adhesiveness to wires from becoming unstable. Further, the disclosed hose rubber composition contains 0.5 parts by mass to 5 parts by mass of the hydrotalcite with respect to 100 parts by mass of the rubber components, and thus, the hydrotalcite less affects the rubber characteristics such as Eb (elongation at break) and Tb (tensile strength).

From the above points, the disclosed hose rubber composition has improved adhesiveness to wires while maintaining rubber characteristics.

The disclosed hose rubber composition contains acrylonitrile-butadiene rubber (NBR) and ethylene-propylene-diene rubber (EPDM) as rubber components. NBR and EPDM may be modified or not modified at the molecular chain ends. Further, NBR and EPDM are preferably produced through emulsion polymerization (so as to be obtained as emulsion-polymerized NBR and emulsion-polymerized EPDM). Emulsion-polymerized NBR is commercially available in general. Therefore, from a viewpoint of availability, emulsion-polymerized NBR is preferred. On the other hand, emulsion-polymerized EPDM and solution-polymerized EPDM are both commercially available. Here, the solution-polymerized EPDM is expensive as the scale of distribution thereof is still small. Therefore, from a viewpoint of availability, the emulsion-polymerized EPDM is preferred. Note that the rubber components of the disclosed hose rubber composition consist only of NBR and EPDM.

The ratio of NBR in the rubber components, though not particularly limited, is generally preferably 30 to 75 mass%, more preferably 40 to 75 mass%, and furthermore preferably 45 to 70 mass%, from a viewpoint of oil resistance in the case where NBR is used for an outer cover rubber of a hydraulic hose. The NBR ratio of 30 mass% or more prevents the average acrylonitrile content (AN content) in the rubber composition from becoming excessively small, which thus provides sufficient oil resistance. Further, the NBR ratio of 75 mass% or less secures a compoundable EPDM amount, to thereby provide sufficient weather resistance.

Any publicly-known NBR may be appropriately selected and used as the NBR with no particular limitation, where the acrylonitrile content (AN content) in NBR is preferably 26 mass% or less, more preferably 15 to 26 mass%, and furthermore preferably 20 to 26 mass%. The AN content in NBR of 26 mass% or less provides high compatibility with EPDM and sufficient rubber characteristics. Further, the AN content therein of 15 mass% or more provides sufficient oil resistance.

On the other hand, the ratio of EPDM in the rubber components is not particularly limited, either. However, in the case where EPDM is used for an outer cover rubber of a hydraulic hose, the EPDM ratio is generally preferably 25 to 50 mass%, more preferably 30 to 40 mass%, and furthermore preferably 30 to 35 mass%, from a viewpoint of weather resistance. The EPDM ratio of 25 mass% or more provides sufficient weather resistance. Further, the EPDM ratio of 50 mass% or less sufficiently secures a compoundable NBR amount, to thereby provide well-balanced oil resistance and weather resistance.

The disclosed hose rubber composition further contains a cobalt salt of an organic acid. The hose rubber composition containing a cobalt salt of an organic acid has improved adhesiveness to wires to be used for reinforcement of the hose, particularly brass-plated wires, and further to cords formed by twisting such wires. Here, the wire material is preferably metal.

The cobalt salt of an organic acid is cobalt versatate. From a viewpoint of adhesiveness to wires, cobalt versatate is used.

Preferably, 1 to 5 parts by mass, and more preferably, 2 to 4 parts by mass of the cobalt salt of an organic acid may be contained with respect to 100 parts by mass of the rubber components. The content of the cobalt salt of an organic acid of 1 part by mass or more improves adhesiveness to wires, and the content thereof of 5 parts by mass or less prevents excessive tackiness of the rubber composition and provides favorable processability for the rubber composition.

The disclosed hose rubber composition further contains hydrotalcite. As described above, the hydrotalcite adsorbs moisture, and the hydrotalcite adsorbs an emulsifier deriving from rubber components as raw materials if present.

In general, the hydrotalcite is a kind of clay mineral produced in nature but may also be synthesized. In the present disclosure, a natural product or a synthetic product may both be used. For example, hydrotalcite is preferably a double hydroxide represented by the following general formula (1):

M¹₈₋ₓM²ₓ(OH)₁₆CO₂·nH₂O ... (1)

In the formula (1): M¹ represents Mg²⁺, Fe²⁺, Zn²⁺, Ca²⁺, Ni²⁺, Co²⁺, Cu²⁺, or the like; M² represents Al³⁺, Fe³⁺, Mn³⁺, or the like; and 2≤x≤5, n≥0.

Specific examples of the hydrotalcite include
Mg_{4.5}Al₂(OH)₁₃CO₃·3.5H₂O, Mg_{4.5}Al₂(OH)₁₃CO₃, Mg₄Al₂(OH)₁₂CO₃·3.5H₂O, Mg₆Al₂(OH)₁₆CO₃·4H₂O, Mg₅Al₂(OH)₁₄CO₃·4H₂O,
Mg₃Al₂(OH)₁₀CO₃·1.7H₂O, Mg₃ZnAl₂(OH)₁₂CO₃·wH₂O (w is a number of 0 or more), and Mg₃ZnAl₂(OH)₁₂CO₃. Examples of commercially-available hydrous hydrotalcite include "DHT-4A" and "DHT-6" available from Kyowa Chemical Industry Co., Ltd.

The content of the hydrotalcite is in the range of 0.5 to 5 parts by mass, and preferably 0.5 to 3 parts by mass with respect to 100 parts by mass of the rubber components. The hydrotalcite content of less than 0.5 parts by mass with respect to 100 parts by mass of the rubber components provides low ability of absorbing moisture or an emulsifier and may deteriorate adhesiveness. On the other hand, the hydrotalcite content of more than 5 parts by mass may affect rubber characteristics.

The disclosed hose rubber composition may contain various compounding agents in addition to the rubber components, the cobalt salt of an organic acid, and hydrotalcite. Examples of the compounding agent include: a crosslinking agent (vulcanizing agent) such as sulfur; a vulcanization accelerator; a reinforcing filler; an antioxidant; a plasticizer; waxes; a softener; a lubricant; an ultraviolet absorbing agent; a dispersant; a compatibilizing agent; a homogenizing agent; steric acid; and zinc oxide.

The crosslinking agent (vulcanizing agent) is preferably sulfur, and the content thereof is generally 0.5 to 3.5 parts by mass, preferably 1 to 3.5 parts by mass, with respect to 100 parts by mass of the rubber components.

Further, the disclosed hose rubber composition may further contain a basic inorganic oxide such as magnesium oxide or calcium oxide. Here, preferably 4 parts by mass or less of the basic inorganic oxide is contained with respect to 100 parts by mass of the rubber components. The content of the basic inorganic oxide being 4 parts by mass or less with respect to 100 parts by mass of the rubber component can sufficiently suppress influence on the rubber characteristics.

The disclosed hose rubber composition can be obtained, for example, by kneading the above-mentioned components using a mixer such as an open-type mixing knead roller, an internal-type Banbury mixer, or a kneader.

### <Hydraulic Hose>

The disclosed hydraulic hose employs the above-mentioned hose rubber composition. In the disclosed hydraulic hose, the above-mentioned hose rubber composition may be used for various parts of the hydraulic hose but is preferably used for an outer surface rubber layer (outer cover rubber) of the hydraulic hose. The disclosed hydraulic hose employs the hose rubber composition having improved adhesiveness to wires while maintaining the above-mentioned rubber characteristics. Thus, the disclosed hydraulic hose has high adhesiveness between the rubber composition and wires generally used in hydraulic hoses, and is also high in durability as it maintains the rubber characteristics of the parts employing the rubber composition.

For example, a hydraulic hose 1 according one embodiment of the present disclosure employing the above-mentioned hose rubber composition for an outer surface rubber layer (outer cover rubber) includes, as illustrated in FIG. 1: an inner surface rubber layer (inner tube layer) 2; a reinforcement layer 3 positioned on the radially outer side of the inner surface rubber layer 2; and an outer surface rubber layer (outer cover rubber) 4 positioned on the radially outer side of the reinforcement layer 3.

For manufacture of the hydraulic hose, the following method may be illustrated.

First, outside a core body (mandrel) having substantially the same diameter as the inner diameter of a hose, a rubber composition for an inner surface rubber layer (inner tube rubber) is extruded to coat the mandrel, to thereby form the inner surface rubber layer (inner tube rubber) 2 (inner tube extruding step). Next, outside the inner surface rubber layer 2 formed in the inner tube extruding step, a predetermined number of brass-plated wires are knitted to laminate the reinforcement layer 3 (knitting step), and outside the reinforcement layer 3, the disclosed hose rubber composition is extruded, to thereby form the outer surface rubber layer (outer cover rubber) 4 (outer cover extruding step). Further, as required, outside of the outer surface rubber layer 4 formed in the outer cover extruding step is coated with a resin (resin mold coating step), and the resultant is vulcanized under general conditions (vulcanizing step). After vulcanization, the above-mentioned coated resin is peeled off (resin mold peeling step), and the mandrel is removed (mandrel moving step), to thereby provide the hydraulic hose 1 having the reinforcement layer 3 formed between the inner surface rubber layer 2 and the outer surface rubber layer 4.

The hydraulic hose 1 may be structured as: a three-layer structure including the inner surface rubber layer 2, the reinforcement layer 3, and the outer surface rubber layer 4 sequentially laminated from the inside; or a five-layer structure including two reinforcement layers having an intermediate rubber layer (intermediate rubber) between the two reinforcement layers for further imparting strength and the like, although not illustrated. These structures may be appropriately defined in accordance with the prescribed properties of the hose. Further, the reinforcement layers do not have to be all formed of brass-plated wires, and a reinforcing layer partially formed of organic fibers may also be used.

### EXAMPLES

Hereinafter, the present disclosure will be described more specifically by way of Examples. However, the present disclosure is no way limited by Examples.

### <Preparation and Evaluation of Rubber Composition>

Rubber components and compounding agents (all raw materials excluding sulfur and vulcanization accelerator) illustrated in Tables 1 and 2 were introduced into a Banbury mixer. The mixture was kneaded until the kneaded mixture reached a temperature of 160°C, which was then cooled to about 40°C or below.

Next, sulfur (crosslinking agent) and a vulcanization accelerator were introduced. The mixture was kneaded until the kneaded mixture reached a temperature of 100°C, to thereby prepare a rubber composition.

### (1) Initial Adhesiveness

An unvulcanized rubber composition was rolled to a sheet of 150 mm × 150 mm × 2 mm, on which 7 brass-plated wires cut to φ 0.33 mm × 100 mm were placed without any spaces in between and fixed with a tape. The sheet thus obtained as a sample was vulcanized under the conditions of 150°C × 60 min. After the vulcanization, the sample was taken out and left standing at room temperature for 24 hours. Then, of the seven wires, five wires were pulled off at once at 90°, leaving the two at both ends. The deposit ratio of the rubber on the entire surface of the five wires thus pulled off (the rubber coverage on the entire surface of the wires) is represented by percentage. Larger values represent more favorable initial adhesiveness.

### (2) Adhesiveness after Moisture Absorption

An unvulcanized rubber composition was stored at 40°C and 90%RH for 10 hours for moisture absorption treatment. Adhesiveness after moisture absorption was determined similarly to evaluation of "Initial Adhesiveness" except that the rubber composition after moisture absorption was used. Tables 1 and 2 show the deposit ratio of the rubber. Larger values represent more favorable adhesiveness after moisture absorption.

Evaluation of the adhesiveness was represented as:
"good" when the deposit ratio of the rubber is 90% or more in both (1) initial adhesiveness and (2) adhesiveness after moisture absorption;
"fair" when one of (1) initial adhesiveness and (2) adhesiveness after moisture absorption is 80% or more and less than 90% and the other is 90% or more; and
"poor" when at least one of (1) initial adhesiveness and (2) adhesiveness after moisture absorption is less than 80%.

### (3) Rubber Characteristics

The obtained rubber composition was vulcanized at 150°C × 60 min, and then a tensile test was conducted at room temperature (23 °C) in accordance with JIS K6251, to thereby measure Eb (elongation at break) and Tb (tensile strength). The values were represented as index numbers with respect 100 for Comparative Example 1. Larger values represent larger elongation at break and higher tensile strength.

Evaluation regarding the rubber characteristics was represented as:
"good" when index numbers of both Eb and Tb are 90 or more; and
"poor" when at least one of index numbers of Eb and Tb is less than 90.

Overall evaluation was represented by:
good: good in both adhesiveness evaluation and rubber characteristics evaluation;
fair: fair in adhesiveness and good in rubber characteristics and
poor: at least one of adhesiveness evaluation and rubber characteristics evaluation is poor.

In Tables 1 and 2, the results of Comparative Examples 2-8 and Examples 3-20 are predicted test results.

**[Table 1]**

| | | | Comparative Example 1 | Comparative Example 2 | Example 1 | Example 2 | Example 3 | Example 4 | Example 5 | Comparative Example 3 | Comparative Example 4 | Comparative Example 5 | Comparative Example 6 | Comparative Example 7 | Comparative Example 8 |
|---|---|---|---|---|---|---|---|---|---|---|---|---|---|---|---|
| | NBR *1 | | 65 | 65 | 65 | 65 | 65 | 65 | 65 | 65 | 65 | 65 | 65 | 65 | 65 |
| | EPDM *2 | | 35 | 35 | 35 | 35 | 35 | 35 | 35 | 35 | 35 | 35 | 35 | 35 | 35 |
| | Carbon black *3 | | 75 | 75 | 75 | 75 | 75 | 75 | 75 | 75 | 75 | 75 | 75 | 75 | 75 |
| | Antioxidant A *4 | | 2 | 2 | 2 | 2 | 2 | 2 | 2 | 2 | 2 | 2 | 2 | 2 | 2 |
| | Antioxidant B *5 | | 5 | 5 | 5 | 5 | 5 | 5 | 5 | 5 | 5 | 5 | 5 | 5 | 5 |
| | Petroleum resin *6 | | 5 | 5 | 5 | 5 | 5 | 5 | 5 | 5 | 5 | 5 | 5 | 5 | 5 |
| | Cobalt naphthenate *7 | | 3 | 3 | 3 | 3 | 3 | 3 | 3 | 3 | 3 | 3 | 3 | 3 | 0 |
| | Cobalt versatate *8 | | 0 | 0 | 0 | 0 | 0 | 0 | 0 | 0 | 0 | 0 | 0 | 0 | 0 |
| Composition | Cobalt stearate *9 | parts by mass | 0 | 0 | 0 | 0 | 0 | 0 | 0 | 0 | 0 | 0 | 0 | 0 | 0 |
| | Plasticizer *10 | | 15 | 15 | 15 | 15 | 15 | 15 | 15 | 15 | 15 | 15 | 15 | 15 | 15 |
| | Surfur *11 | | 2.5 | 2.5 | 2.5 | 2.5 | 2.5 | 2.5 | 2.5 | 2.5 | 2.5 | 2.5 | 2.5 | 2.5 | 2.5 |
| | Vulcanization accelerator *12 | | 0.5 | 0.5 | 0.5 | 0.5 | 0.5 | 0.5 | 0.5 | 0.5 | 0.5 | 0.5 | 0.5 | 0.5 | 0.5 |
| | Zinc oxide *13 | | 10 | 10 | 10 | 10 | 10 | 10 | 10 | 10 | 10 | 10 | 10 | 10 | 10 |
| | Vulcanization retardant *14 | | 0.3 | 0.3 | 0.3 | 0.3 | 0.3 | 0.3 | 0.3 | 0.3 | 0.3 | 0.3 | 0.3 | 0.3 | 0.3 |
| | Hydrotalcite A *15 | | 0 | 0.3 | 0.5 | 1 | 1.5 | 3 | 5 | 6 | 0 | 0 | 0 | 0 | 1 |
| | Hydrotalcite B *16 | | 0 | 0 | 0 | 0 | 0 | 0 | 0 | 0 | 0 | 0 | 0 | 0 | 0 |
| | Magnesium oxide *17 | | 0 | 0 | 0 | 0 | 0 | 0 | 0 | 0 | 1.5 | 5 | 0 | 0 | 0 |
| | Calcium oxide *18 | | 0 | 0 | 0 | 0 | 0 | 0 | 0 | 0 | 0 | 0 | 1.5 | 5 | 0 |
| Adhesiveness | Initial adhesiveness (%) | % | 100 | 100 | 100 | 100 | 100 | 100 | 100 | 100 | 95 | 80 | 90 | 0 | 0 |
| | Adhesiveness after moisture absorption (%) | % | 20 | 45 | 90 | 94 | 93 | 92 | 92 | 93 | 20 | 10 | 0 | 0 | 0 |
| | Evaluation | - | poor | poor | good | good | good | good | good | good | poor | poor | poor | poor | poor |
| Rubber characteristics | Elongation at break (Eb) | Index | 100 | 100 | 101 | 97 | 97 | 94 | 92 | 88 | 95 | 92 | 91 | 88 | 84 |
| | Tensile strength (Tb) | Index | 100 | 100 | 99 | 97 | 96 | 96 | 92 | 89 | 97 | 93 | 93 | 85 | 83 |
| | Evaluation | - | good | good | good | good | good | good | good | poor | good | good | good | poor | poor |
| Overall evaluation | | - | poor | poor | good | good | good | good | good | poor | poor | poor | poor | poor | poor |

| | | | | | | | | | | | | | | | |
|---|---|---|---|---|---|---|---|---|---|---|---|---|---|---|---|
| *Examples 1 to 5 are provided for reference only. | | | | | | | | | | | | | | | |

**[Table 2]**

| | | | Example 6 | Example 7 | Example 8 | Example 9 | Example 10 | Example 11 | Example 12 | Example 13 | Example 14 | Example 15 | Example 16 | Example 17 | Example 18 | Example19 | Example 20 |
|---|---|---|---|---|---|---|---|---|---|---|---|---|---|---|---|---|---|
| | NBR *1 | | 65 | 65 | 65 | 65 | 65 | 65 | 65 | 65 | 65 | 65 | 65 | 70 | 60 | 65 | 65 |
| | EPDM *2 | | 35 | 35 | 35 | 35 | 35 | 35 | 35 | 35 | 35 | 35 | 35 | 30 | 40 | 35 | 35 |
| | Carbon black *3 | | 75 | 75 | 75 | 75 | 75 | 75 | 75 | 75 | 75 | 75 | 75 | 75 | 75 | 75 | 75 |
| | Antioxidant A *4 | | 2 | 2 | 2 | 2 | 2 | 2 | 2 | 2 | 2 | 2 | 2 | 2 | 2 | 2 | 2 |
| | Antioxidant B *5 | | 5 | 5 | 5 | 5 | 5 | 5 | 5 | 5 | 5 | 5 | 5 | 5 | 5 | 5 | 5 |
| | Petroleum resin *6 | | 5 | 5 | 5 | 5 | 5 | 5 | 5 | 5 | 5 | 5 | 5 | 5 | 5 | 5 | 5 |
| | Cobalt naphthenate *7 | | 3 | 3 | 3 | 3 | 1 | 5 | 0 | 0 | 0 | 0 | 3 | 3 | 3 | 0.5 | 6 |
| | Cobalt versatate *8 | | 0 | 0 | 0 | 0 | 0 | 0 | 1 | 5 | 0 | 0 | 0 | 0 | 0 | 0 | 0 |
| Composition | Cobalt stearate *9 | parts by mass | 0 | 0 | 0 | 0 | 0 | 0 | 0 | 0 | 1 | 5 | 0 | 0 | 0 | 0 | 0 |
| | Platsticizer *10 | | 15 | 15 | 15 | 15 | 15 | 15 | 15 | 15 | 15 | 15 | 15 | 15 | 15 | 15 | 15 |
| | Sulfur *11 | | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | Vulcanization accelerator *12 | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | Zinc oxide *13 | | 10 | 10 | 10 | 10 | 10 | 10 | 10 | 10 | 10 | 10 | 10 | 10 | 10 | 10 | 10 |
| | Vulcanization retardant *14 | | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| | Hydrotalcite A *15 | | 1 | 1 | 1 | 1 | 1 | 1 | 1 | 1 | 1 | 1 | 0 | 1.5 | 1.5 | 1 | 1 |
| | Hydrotalcite B *16 | | 0 | 0 | 0 | 0 | 0 | 0 | 0 | 0 | 0 | 0 | 1.5 | 0 | 0 | 0 | 0 |
| | Magnesium oxide *17 | | 1.5 | 4 | 0 | 0 | 0 | 0 | 0 | 0 | 0 | 0 | 0 | 0 | 0 | 0 | 0 |
| | Calcium oxide *18 | | 0 | 0 | 1.5 | 4 | 0 | 0 | 0 | 0 | 0 | 0 | 0 | 0 | 0 | 0 | 0 |
| Adhesiveness | Initial Adhesiveness (%) | % | 100 | 90 | 100 | 90 | 88 | 97 | 100 | 100 | 85 | 88 | 96 | 100 | 87 | 87 | 93 |
| | Adhesiveness after moisture absorption (%) | % | 92 | 90 | 92 | 90 | 87 | 94 | 95 | 97 | 86 | 85 | 92 | 97 | 84 | 81 | 85 |
| | Evaluation | - | good | good | good | good | fair | good | good | good | fair | fair | good | good | fair | fair | fair |
| Rubber characteristics | Elongation at break (Eb) | Index | 94 | 91 | 94 | 91 | 98 | 102 | 102 | 105 | 94 | 97 | 95 | 97 | 94 | 97 | 93 |
| | Tensile strength (Tb) | Index | 92 | 90 | 92 | 90 | 96 | 91 | 100 | 96 | 96 | 90 | 91 | 94 | 92 | 94 | 90 |
| | Evaluation | - | good | good | good | good | good | good | good | good | good | good | good | good | good | good | good |
| Overall evaluation | | - | good | good | good | good | fair | good | good | good | fair | fair | good | good | fair | fair | fair |

| | | | | | | | | | | | | | | | | | |
|---|---|---|---|---|---|---|---|---|---|---|---|---|---|---|---|---|---|
| *Examples 6 to 11 and 14 to 20 are provided for reference only. *1 NBR: "JSR N250S" available from JSR Corporation, AN content of 20 mass%, emulsion-polymerized NBR *2 EPDM: "JSR EP35" available from JRS Corporation, emulsion-polymerized EPDM *3 Carbon black: "Asahi #65" available from Asahi Carbon Co., Ltd., FEF grade carbon black *4 Antioxidant A: "NOCRAC 224" available from Ouchi Shinko Chemical Industrial Co., Ltd. *5 Antioxidant B: "ANTIGENE 6C" available from Sumitomo Chemical Co., Ltd. *6 Petroleum resin: "ESCOREZ 1102" available from Tonen Chemical Corporation, polymerized C4-5 hydrocarbon fraction *7 Cobalt naphthenate: "Cobalt naphthenate" available from DIC Corporation *8 Cobalt versatate: "Cobalt versatate" available from DIC Corporation *9 Cobalt stearate: "Cobalt stearate" available from DIC Corporation *10 Plasticizer: "SANSO CIZER DOA" available from New Japan Chemical Co., Ltd. dioctyl adipate (DOA) *11 Sulfur: "SULFAX 5" available from Tsurumi Chemical Industry Co., Ltd. *12 Vulcanization accelerator: "NOCCELER CZ" available from Ouchi Shinko Chemical Industrial Co., Ltd., vulcanization accelerator CBS *13 Zinc oxide: "Ginrei SR" available from Toho Zinc Co., Ltd. *14 Vulcanization retardant: "Santogard PVI" available from Monsanto Company *15 Hydrotalcite A: "DHT-4A" available from Kyowa Chemical Industry Co., Ltd., BET value = 12 m²/g *16 Hydrotalcite B: "KW-2100" available from Kyowa Chemical Industry Co., Ltd., BET value = 190 m²/g *17 Magnesium oxide: "KYOWAMAG 30" available from Kyowa Chemical Industry Co., Ltd. *18 Calcium oxide: "CML #21" available from Ohmi Chemical Industry Co., Ltd. | | | | | | | | | | | | | | | | | |

As illustrated in Tables 1 and 2, the rubber compositions according to Examples of the present disclosure have improved adhesiveness to wires while maintaining rubber characteristics.

### INDUSTRIAL APPLICABILITY

The disclosed hose rubber composition may be used in various parts of the hose, and in particular, may preferably be used for an outer surface rubber layer (outer cover rubber) of a hydraulic hose. Further, the disclosed hydraulic hose may be used for various machines operating by hydraulics such as industrial machines and construction machines.

### REFERENCE SIGNS LIST

- 1: hydraulic hose
- 2: inner surface rubber layer (inner tube rubber)
- 3: reinforcement layer
- 4: outer surface rubber layer (outer cover rubber)

## Claims

1. A hose rubber composition, comprising:
acrylonitrile-butadiene rubber (NBR) and ethylene-propylene-diene rubber (EPDM), as rubber components; and
a cobalt salt of an organic acid and hydrotalcite,
wherein 0.5 to 5 parts by mass of the hydrotalcite is contained with respect to 100 parts by mass of the rubber components,
the cobalt salt of an organic acid is cobalt versatate, and
the rubber components of the hose rubber composition consist only of the acrylonitrile-butadiene rubber (NBR) and the ethylene-propylene-diene rubber (EPDM).

2. The hose rubber composition according to claim 1, wherein 1 to 5 parts by mass of the cobalt salt of an organic acid is contained with respect to 100 parts by mass of the rubber components.

3. The hose rubber composition according to claim 1 or 2, wherein a mass ratio (NBR/EPDM) of the acrylonitrile-butadiene rubber (NBR) to the ethylene-propylene-diene rubber (EPDM) is 55/45 to 75/25.

4. A hydraulic hose comprising the hose rubber composition according to any one of claims 1 to 3.

## Patentansprüche

1. Schlauchkautschukzusammensetzung, umfassend:
Acrylnitril-Butadien-Kautschuk (NBR) und Ethylen-Propylen-Dien-Kautschuk (EPDM) als Kautschukkomponenten; und
ein Kobaltsalz einer organischen Säure und Hydrotalcit,
wobei 0,5 bis 5 Masseteile des Hydrotalcits mit Bezug auf 100 Masseteile der Kautschukkomponenten enthalten sind,
das Kobaltsalz einer organischen Säure Kobaltversatat ist und
die Kautschukkomponente der Schlauchkautschukzusammensetzung nur aus dem Acrylnitril-Butadien-Kautschuk (NBR) und dem Ethylen-Propylen-Dien-Kautschuk (EPDM) besteht.

2. Schlauchkautschukzusammensetzung nach Anspruch 1, wobei 1 bis 5 Masseteile des Kobaltsalzes einer organischen Säure mit Bezug auf 100 Masseteile der Kautschukkomponenten enthalten sind.

3. Schlauchkautschukzusammensetzung nach Anspruch 1 oder 2, wobei ein Masseverhältnis (NBR/EPDM) des Acrylnitril-Butadien-Kautschuks (NBR) zu dem Ethylen-Propylen-Dien-Kautschuk (EPDM) 55/45 bis 75/25 beträgt.

4. Hydraulikschlauch umfassend die Schlauchkautschukzusammensetzung nach irgendeinem der Ansprüche 1 bis 3.

## Revendications

1. Composition de caoutchouc pour tuyau souple, comprenant:
du caoutchouc d'acrylonitrile-butadiène (NBR) et du caoutchouc d'éthylène-propylène-diène (EPDM), comme constituants de caoutchouc; et
un sel de cobalt d'un acide organique et d'hydrotalcite,
où de 0,5 à 5 parties en masse de l'hydrotalcite sont contenues par rapport à 100 parties en masse des constituants de caoutchouc,
le sel de cobalt d'un acide organique est le versatate de cobalt, et
les constituants de caoutchouc de la composition de caoutchouc pour tuyau souple sont constitués uniquement de caoutchouc d'acrylonitrile-butadiène (NBR) et de caoutchouc d'éthylène-propylène-diène (EPDM).

2. Composition de caoutchouc pour tuyau souple selon la revendication 1, dans laquelle de 1 à 5 parties en masse du sel de cobalt d'un acide organique sont contenues par rapport à 100 parties en masse des constituants de caoutchouc.

3. Composition de caoutchouc pour tuyau souple selon la revendication 1 ou 2, un rapport en masse (NBR/EPDM) du caoutchouc d'acrylonitrile-butadiène (NBR) au caoutchouc d'éthylène-propylène-diène (EPDM) étant de 55/45 à 75/25.

4. Tuyau hydraulique souple comprenant la composition de caoutchouc pour tuyau souple selon l'une quelconque des revendications 1 à 3.
